# EUROPEAN PATENT APPLICATION

(11) **EP 4 678 465 A1**
(43) Date of publication of application: **14.01.2026**
(21) Application number: 24205589.5
(22) Date of filing: 09.10.2024
(51) Int. Cl.: B60L 53/31, B60L 53/37, B60L 53/67

(54) **MONITORING SYSTEM AND METHOD FOR CHARGING PILE**

(30) Priority: 08.07.2024 TW 113125449
(71) Applicant: Car In International Co., Ltd., Taipei City 100 (TW)
(72) Inventor: Huang, Chi-Liang, 100 Taipei City (TW)
(74) Representative: Straus, Alexander

(57) **Abstract**

A monitoring system (1), for a charging pile (2), wherein the charging pile (2) charges an electric vehicle (3) through a power module (20), includes an image capture module (10), configured to capture at least one environmental image signal (IMG) related to the electric vehicle (3); and a control module (16), coupled to the image capture module (10), configured to apple an artificial intelligence technology to analyze the at least one environmental image signal (IMG), to generate an analysis result, and control the power module (20) according to the analysis result.

## Description

### Field of the Invention

The present invention relates to a monitoring system and method for a charging pile, and particularly to a monitoring system and method capable of providing early warning of abnormal conditions of the charging pile and take appropriate actions.

### Background of the Invention

With the popularization of electric vehicles, the safety of charging piles has become a focus of public attention. As a key facility for electric vehicles to replenish energy, the safety characteristics of charging piles are crucial for ensuring the safety of users and vehicles. Modern charging pile technology has developed a series of safety protection measures, including overload protection, leakage protection, lightning protection, etc. These functions are built on the vehicle's battery management system (BMS) and the charging pile's power detection system to ensure that even if an accident occurs during the charging process, the power can be immediately cut off to prevent accidents.

However, during the vehicle charging process, in addition to power anomalies, there are many environmental factors that may cause safety hazards, such as neighboring vehicles catching fire, collision accidents, etc. Especially since public charging stations are generally unmanned, problems cannot be reported in time when they occur, which may lead to more serious accidents.

Therefore, how to provide early warning of abnormal conditions of charging piles and take appropriate actions has become one of the goals that the industry strives for.

### Summary of the Invention

This in mind, the present invention aims at providing a monitoring system and method for a charging pile to provide early warning of abnormal conditions of charging piles and take appropriate actions to solve the abovementioned problem.

This is achieved by a monitoring system and a monitoring method for a charging pile according to the independent claims. The dependent claims pertain to corresponding further developments and improvements.

As will be seen more clearly from the detailed description following below, a claimed monitoring system, for a charging pile, wherein the charging pile charges an electric vehicle through a power module comprises an image capture module, configured to capture at least one environmental image signal related to the electric vehicle; and a control module, coupled to the image capture module, configured to apple an artificial intelligence technology to analyze the at least one environmental image signal, to generate an analysis result, and control the power module according to the analysis result.

In another aspect, a claimed monitoring method, for a charging pile, wherein the charging pile charges an electric vehicle through a power module comprises capturing at least one environmental image signal related to the electric vehicle; and applying an artificial intelligence technology to analyze the at least one environmental image signal, to generate an analysis result, and control the power module according to the analysis result.

### Brief Description of the Drawings

Fig. 1 is a schematic diagram of a monitoring system according to an embodiment of the present invention.
Fig. 2 is a schematic diagram of an operating scenario of the monitoring system shown in Fig. 1.
Fig. 3A, Fig. 3B, Fig. 3C, Fig. 3D, Fig. 4, Fig. 5A, Fig. 5B, Fig. 6 and Fig. 7 show different environmental image signals according to embodiments of the present invention.
Fig. 8 is a schematic diagram of a monitoring method according to an embodiment of the present invention.

### Detailed Description

Certain terms are used throughout the description and following claims to refer to particular components. As one skilled in the art will appreciate, hardware manufacturers may refer to a component by different names. This document does not intend to distinguish between components that differ in name but not function. In the following description and in the claims, the terms "include" and "comprise" are utilized in an open-ended fashion, and thus should be interpreted to mean "include, but not limited to ...". Also, the term "couple" is intended to mean either an indirect or direct electrical connection.

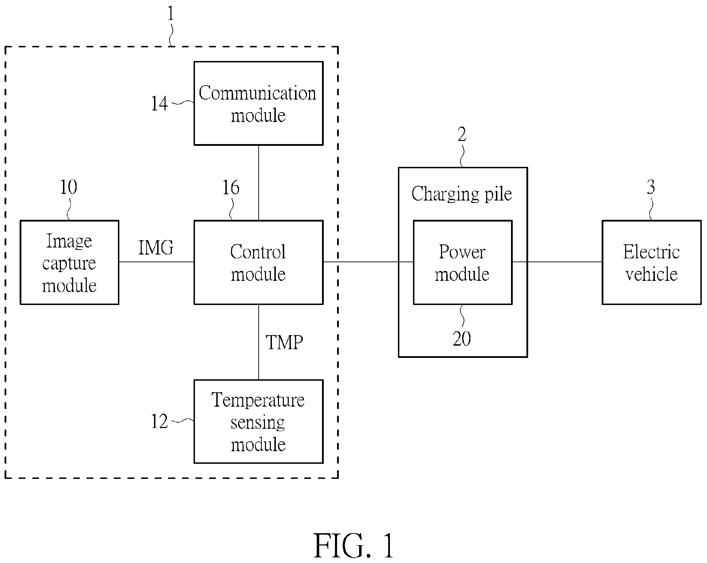

Please refer to Fig. 1. Fig. 1 is a schematic diagram of a monitoring system 1 according to an embodiment of the present invention. The monitoring system 1 is used for a charging pile 2. The charging pile 2 may charge an electric vehicle 3 through a power module 20, while the monitoring system 1 may monitor various information during the charging process of the charging pile 2 to provide early warning of abnormal conditions and can stop the operation of the power module 20 if necessary. The monitoring system 1 includes an image capture module 10, a temperature sensing module 12, a communication module 14, and a control module 16. The image capture module 10 is used to capture at least one environmental image signal IMG related to the electric vehicle 3. The temperature sensing module 12 is used to sense a temperature signal TMP of the environment near the electric vehicle 3. The communication module 14 is used to exchange messages with a host. The control module 16 is coupled to the image capture module 10, the temperature sensing module 12, the communication module 14, and the power module 20 of the charging pile 2, and is used to determine the environmental information of the electric vehicle 3 based on the environmental image signal IMG or the temperature signal TMP, and to receive messages from an external host or output messages to the external host through the communication module 14.

In more detail, the image capture module 10 may be a camera installed on a housing of the charging pile 2, capturing images of the electric vehicle 3 and its surrounding area within a certain range toward a direction of the electric vehicle 3, thereby generating the environmental image signal IMG and sending it to the control module 16. In one embodiment, the image capture module 10 may be a camera placed above the parking space, transmitting the environmental image signal IMG to the control module 16 via wired or wireless means. In another embodiment, the image capture module 10 may consist of multiple cameras positioned at different locations near the parking space, capturing images of the electric vehicle 3 from multiple angles or directions, thus generating the environmental image signal IMG and sending it to the control module 16. In yet another embodiment, the image capture module 10 includes multiple cameras, each capable of capturing images of different wavelengths around the electric vehicle 3, such as natural light, infrared, thermal imaging, etc., thereby generating the environmental image signal IMG and sending it to the control module 16. In short, any image capture device or equipment that can photograph all or part of the electric vehicle 3 and its surrounding area within a certain range can be used to implement the image capture module 10, and is not limited to these examples.

Based on the environmental image signal IMG captured by the image capture module 10, the control module 16 may analyze the environmental image signal IMG using artificial intelligence technology to produce an analysis result, and control the power module 20 accordingly. As known in the field, artificial intelligence technology combines computer science, data analysis, machine learning, and algorithm design techniques, aiming to create intelligent systems that can mimic human learning, reasoning, and self-correction. These systems can make decisions and perform tasks without direct human intervention by analyzing and learning from large amounts of data. For example, in the field of image recognition applications, through deep learning and/or machine learning methods, artificial intelligence technology can learn and identify specific patterns in complex datasets, thereby determining whether specific events occur in the images. The present invention utilizes artificial intelligence technology to analyze the environmental image signal IMG, using deep learning and/or machine learning methods to recognize specific abnormal situations in the environmental image signal IMG, then determine whether a probability of a dangerous condition occurring is greater than a threshold value, and stop charging the electric vehicle 3 when the probability of the dangerous condition occurring exceeds the threshold value, to avoid causing greater harm.

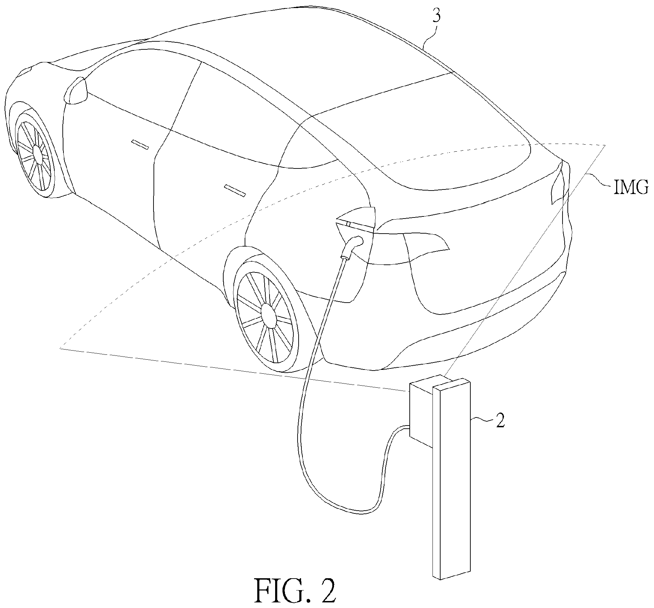

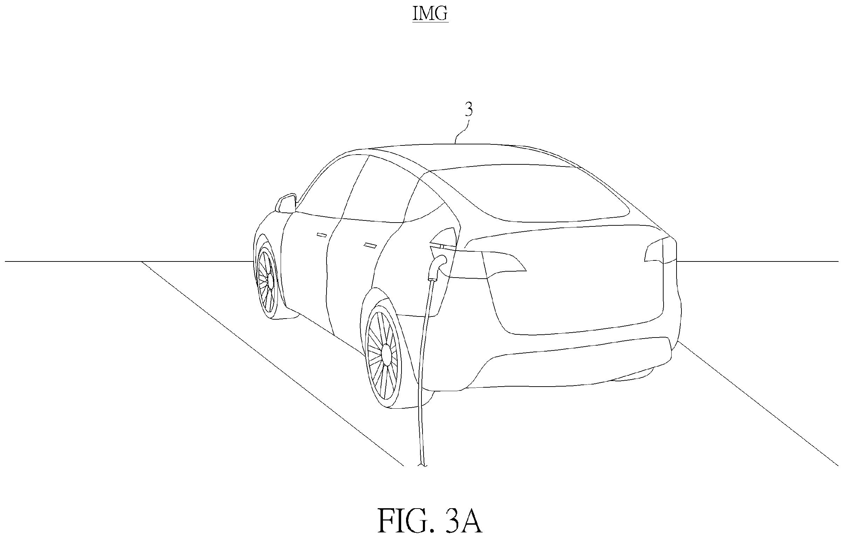

Specifically, please refer to Fig. 2. Fig. 2 is a schematic diagram of an operating scenario of the monitoring system 1. In Fig. 2, the charging pile 2 is charging the electric vehicle 3, while the monitoring system 1 is installed inside the charging pile 2 (thus not shown in Fig. 2) . The image capture module 10 is a camera installed on the housing of the charging pile 2, capturing images of the electric vehicle 3 and its surrounding area within a certain range toward the direction of the electric vehicle 3, thereby generating the environmental image signal IMG as shown in Fig. 3A and sending it to the control module 16. As can be seen from Fig. 3A, the environmental image signal IMG contains images of the electric vehicle 3 and its surrounding area within a certain range.

As mentioned in the above, the control module 16 may analyze the environmental image signal IMG using artificial intelligence technology to produce the analysis result, and control the power module 20 accordingly. Taking smoke detection as an example, since the generation of smoke is often associated with overheating and is an early indicator of fire, however, smoke detection is often subject to false judgments due to external environmental factors. In this case, through artificial intelligence technology, the present invention may more accurately determine whether smoke is present and avoid false judgments.

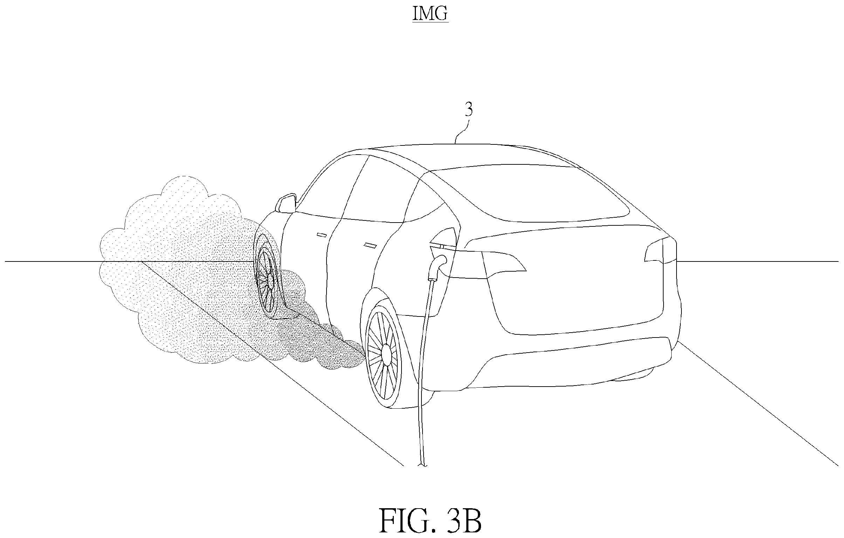

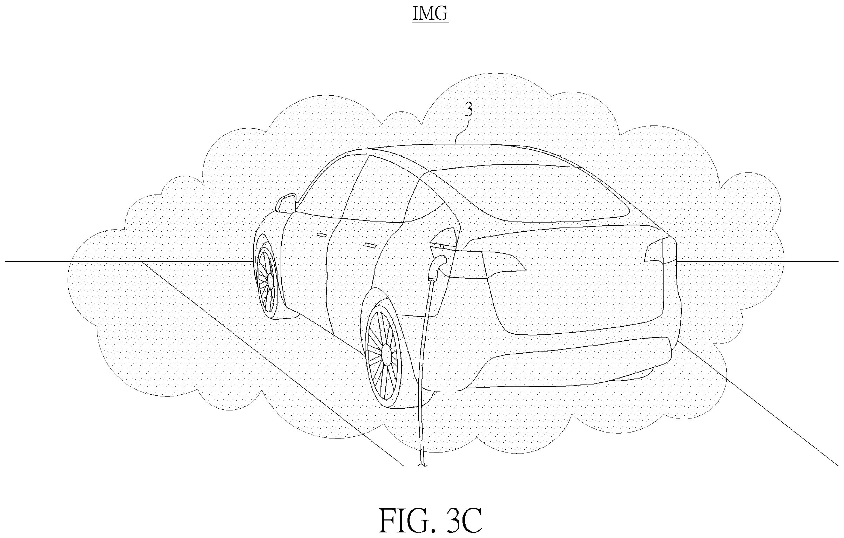

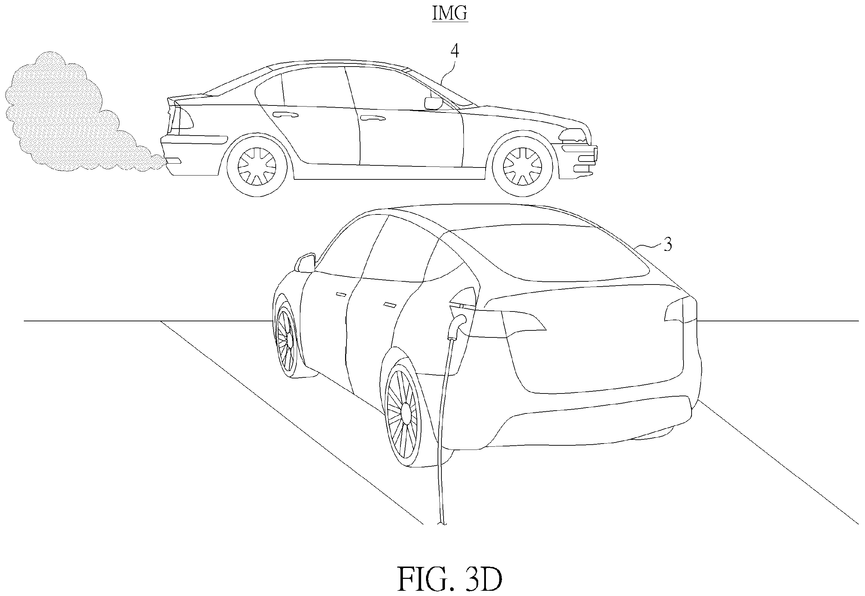

For example, Fig. 3B, Fig. 3C, and Fig. 3D show different environmental image signals IMG. The environmental image signal IMG in Fig. 3B shows smoke generating near the bottom battery of the electric vehicle 3 (i.e., within a predetermined range). Artificial intelligence technology may analyze the characteristics of the smoke situation through machine learning, for instance, the smoke is denser near the battery (poorer light penetration) and thinner away from the battery (better light penetration), and the smoke continuously emits from the bottom battery area. The AI technology may further assess the probability of overheating occurring in the bottom battery of the electric vehicle 3. Furthermore, if the analysis result of the AI technology indicates that the probability of a fire occurring is greater than a threshold value, the control module 16 may stop charging the electric vehicle 3 to reduce harm. Additionally, the control module 16 may notify management personnel through the communication module 14, for example, by communicating with a messaging software service host to connect with the messaging software of the management personnel and send the analysis result to notify them of the abnormal situation. In one embodiment, the control module 16 may simultaneously judge whether the ambient temperature near the electric vehicle 3 is abnormal based on the temperature signal TMP from the temperature sensing module 12, assisting in determining the probability of battery overheating or fire occurrence, and timely controlling the operation of the power module 20.

The environmental image signal IMG in Fig. 3C shows the electric vehicle 3 in a foggy area. AI technology may analyze the characteristics of the fog through machine learning, such as the fog being evenly distributed in the air without obvious flow (phenomenon of spreading from a smoke point). The AI technology may further determine that the fog is merely a normal weather condition, not an abnormal surrounding environment. In this case, the control module 16 will not stop charging the electric vehicle 3. In one embodiment, the control module 16 may simultaneously judge whether the ambient temperature near the electric vehicle 3 is abnormal based on the temperature signal TMP from the temperature sensing module 12, assisting in determining if it is a foggy condition.

The environmental image signal IMG in Fig. 3D shows a car 4 in front of the electric vehicle 3 continuously emitting dense smoke (e.g., due to incomplete combustion or low temperature) . AI technology may analyze the characteristics of the dense smoke through machine learning, such as the smoke being emitted from the rear of the car 4 and spraying in a fixed direction. The AI technology may further determine that the dense smoke is merely due to the exhaust from the car 4, not an abnormal surrounding environment. In this case, the control module 16 will not stop charging the electric vehicle 3. In one embodiment, the control module 16 may simultaneously judge whether the ambient temperature near the electric vehicle 3 is abnormal based on the temperature signal TMP from the temperature sensing module 12, assisting in determining if it is due to the exhaust from the car 4.

It is important to note that Fig. 3B to Fig. 3D are examples of different smoke situations, illustrating various scenarios of smoke generation. In these situations, relying solely on a fixed judgment method could easily lead to misidentification. In contrast, the embodiment of the present invention uses artificial intelligence technology, utilizing deep learning and machine learning algorithms to learn and identify specific patterns from complex datasets in images, recognizing various forms of smoke, thus providing rapid response in the early stages of a fire. AI technology not only improves detection speed but also enhances accuracy, reducing unnecessary interference caused by false alarms.

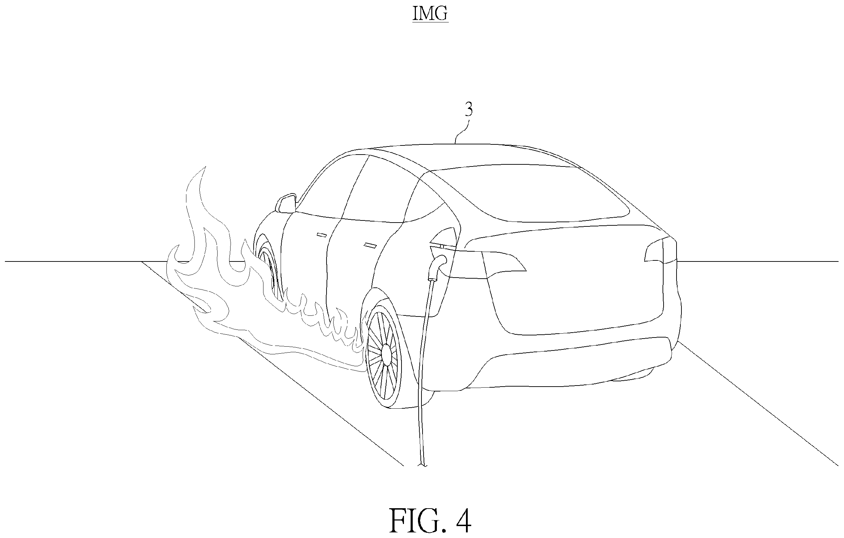

It should be noted that the present invention is not limited to detecting smoke situations . Those skilled in the art may appropriately derive it to detect other abnormal conditions. For example, the environmental image signal IMG in Fig. 4 shows a fire source emerging near the bottom battery of the electric vehicle 3 (i.e., within a predetermined range). AI technology may analyze the characteristics of the fire source situation through machine learning. For instance, sparks first appear near the battery, followed by flames, accompanied by continuous smoke emitting from the bottom battery area. The AI technology may further assess the probability of fire in the bottom battery of the electric vehicle 3. Furthermore, if the analysis result of the AI technology indicates that the probability of a fire occurring is greater than a threshold value, the control module 16 may stop charging the electric vehicle 3 to reduce harm. Additionally, the control module 16 may notify management personnel through the communication module 14, for example, by communicating with a messaging software service host to connect with the messaging software of the management personnel and send the analysis result to notify them of the abnormal situation. Alternatively, the control module 16 may notify the fire department through the communication module 14, such as by connecting to the fire alarm receiving system, sending the analysis result to the fire unit to notify relevant personnel of the abnormal situation, or prompting the fire alarm receiving system to issue a fire alarm to evacuate people in advance. In one embodiment, the control module 16 may simultaneously judge whether the ambient temperature near the electric vehicle 3 is abnormal based on the temperature signal TMP from the temperature sensing module 12, avoiding misidentifying non-fire situations as fires.

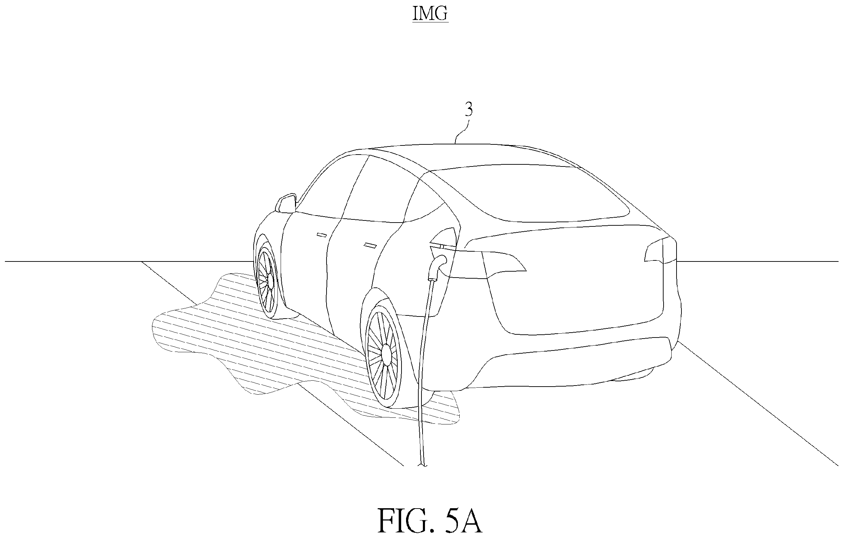

The environmental image signal IMG in Fig. 5A shows water accumulation at the bottom of the electric vehicle 3 (i.e., within a predetermined range) . AI technology may analyze the characteristics of the water accumulation through machine learning. For example, if the height or range of the water accumulation does not change significantly over a period of time, the AI technology may further determine that the water accumulation is a normal condition, not an abnormal surrounding environment. In this case, the control module 16 will not stop charging the electric vehicle 3.

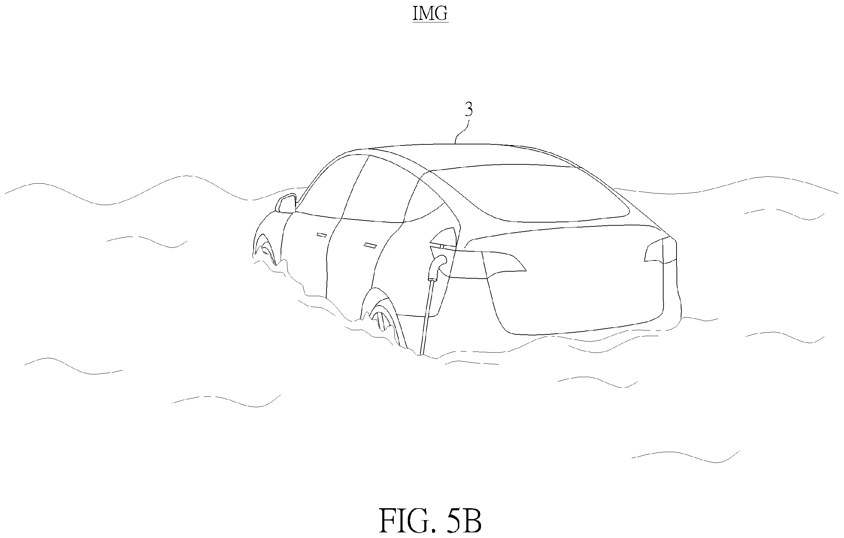

The environmental image signal IMG in Fig. 5B shows flooding at the bottom of the electric vehicle 3. AI technology may analyze the characteristics of the flooding situation through machine learning. For instance, if the flood level continues to rise over time and exceeds half the height of a tire, the AI technology may further assess the probability of a flood occurring at the location of the electric vehicle 3. Furthermore, if the analysis result of the AI technology indicates that the probability of the flood occurring is greater than a threshold value, the control module 16 may stop charging the electric vehicle 3 to reduce potential harm. Additionally, the control module 16 may notify management personnel through the communication module 14. For example, it may communicate with a messaging software service host via the communication module 14 to connect with the messaging software of the management personnel and send the analysis result, notifying them of the abnormal situation.

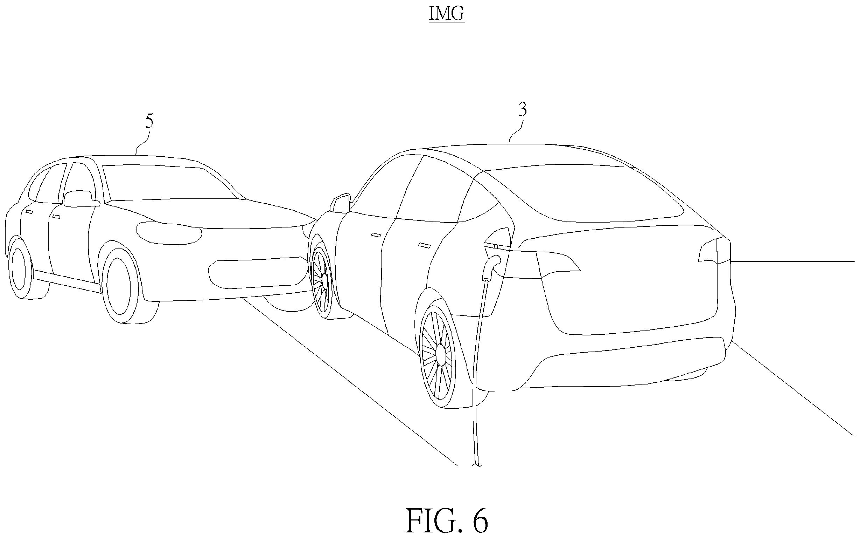

The environmental image signal IMG in Fig. 6 shows the electric vehicle 3 being collided with by another car 5. AI technology may analyze the characteristics of the collision through machine learning, such as whether the collision caused the electric vehicle 3 to shift position, or whether there are visible changes to the appearance of the electric vehicle 3 or the car 5. The AI technology may then further assess the probability of the electric vehicle 3 experiencing a strong collision. Furthermore, if the analysis result of the AI technology indicates that the probability of the electric vehicle 3 experiencing a strong collision is greater than a threshold value, the control module 16 may stop charging the electric vehicle 3 to reduce potential harm. Additionally, the control module 16 may notify management personnel through the communication module 14, for example, by communicating with a messaging software service host to connect with the messaging software of the management personnel and send the analysis result, notifying them of the abnormal situation.

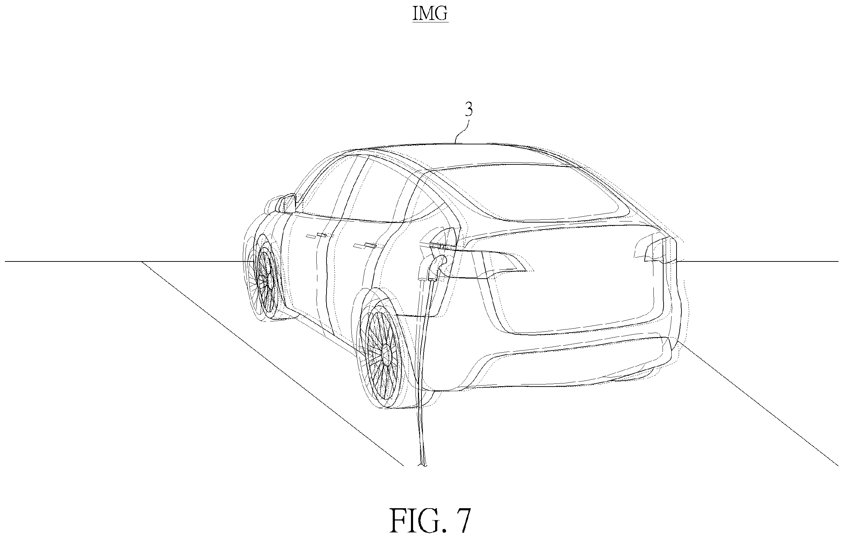

The environmental image signal IMG in Fig. 7 shows an earthquake occurring in the area where the electric vehicle 3 is located. AI technology may analyze the characteristics of the earthquake situation through machine learning, such as whether the earthquake caused the electric vehicle 3 to shift position, the degree of shaking of the electric vehicle 3, etc. The AI technology may then further assess the probability of a strong earthquake occurring in the area where the electric vehicle 3 is located. Furthermore, if the analysis result of the AI technology indicates that the probability of a strong earthquake occurring in the area of the electric vehicle 3 is greater than a threshold value, the control module 16 may stop charging the electric vehicle 3 to reduce potential harm. Additionally, the control module 16 may notify management personnel through the communication module 14, for example, by communicating with a messaging software service host to connect with the messaging software of the management personnel and send the analysis result, notifying them of the abnormal situation.

The previous embodiments illustrate that the monitoring system 1 may use artificial intelligence technology to analyze the environmental image signal IMG, thereby determining whether abnormal situations such as fire, flood, strong earthquake, or car accident have occurred in or around the charging vehicle 3. However, the present invention is not limited to these scenarios. As artificial intelligence technology can continuously update through machine learning to identify various abnormal situations and self-correct or adjust the basis for judgment, it is not constrained by initial settings. On the other hand, when determining the threshold value related to dangerous situations, the control module 16 may preferably use artificial intelligence technology to optimize the setting of the threshold value, for example, by using Convolutional Neural Networks (CNN) to dynamically determine the threshold value, but this is not limited to this method. In one embodiment, the threshold value may also be manually set by operators, which is also within the scope of the present invention.

Furthermore, in addition to using artificial intelligence technology to analyze the environmental image signal IMG, the control module 16 may also control the operation of the power module 20 based on sensing signals from other modules. For example, when the temperature sensing module 12 detects that the temperature signal TMP near the electric vehicle 3 exceeds a temperature threshold, the control module 16 may control the power module 20 to stop charging the electric vehicle 3 or reduce the charging current to avoid dangers from high temperatures. At the same time, the control module 16 may use artificial intelligence technology to optimize the setting of the temperature threshold, or it may be manually set by operators. Alternatively, in one embodiment, multiple temperature thresholds may be set for different controls. For example, when the temperature signal TMP exceeds a first temperature threshold, the charging current is reduced by 4 amperes; when the temperature signal TMP exceeds a second temperature threshold, the charging current is reduced by another 4 amperes; when the temperature signal TMP exceeds a third temperature threshold, charging of the electric vehicle 3 is stopped. Such adjustments to charging operations based on different temperature thresholds should be familiar to those skilled in the art.

On the other hand, besides being used to communicate with messaging software service hosts to connect with the messaging software of the management personnel, in one embodiment, the communication module 14 may also connect to a strong earthquake notification service host to receive earthquake early warnings issued by the host. In other words, in addition to using artificial intelligence technology to analyze the environmental image signal IMG to determine earthquake situations, the control module 16 may also receive earthquake early warnings through the communication module 14, so as to preemptively control the power module 20 to stop charging the electric vehicle 3 when the location of the electric vehicle 3 is affected by a strong earthquake, avoiding more serious harm.

Similarly, in another embodiment, the communication module 14 may also connect to a fire alarm control panel to receive fire alarms issued by the panel. That is, besides using artificial intelligence technology to analyze the environmental image signal IMG to determine fire situations, the control module 16 may also receive fire alarms through the communication module 14, so as to preemptively control the power module 20 to stop charging the electric vehicle 3 when the location of the electric vehicle 3 is affected by a fire, avoiding more serious harm.

Furthermore, the monitoring system 1 may include a warning device, coupled to the control module 16, used to issue warning signals. For example, the warning device may be a speaker, indicator light, screen, etc., used to emit sounds, light signals, images, or text messages. The control module 16 may control the warning device to issue warning signals based on the charging status of the power module 20 or when abnormal situations occur.

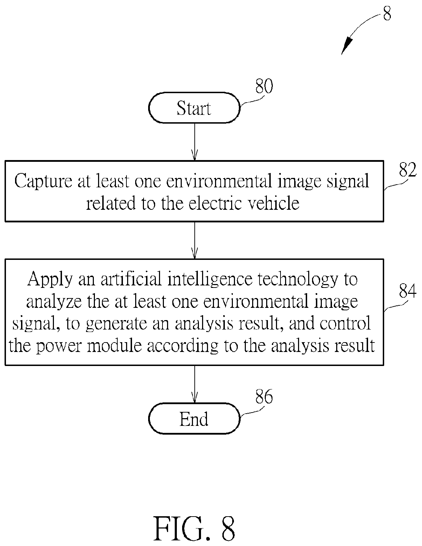

The aforementioned operation of the monitoring system 1 can be summarized as a monitoring method 8, as shown in Fig. 8. The monitoring method 8 includes the following steps:
Step 80: Start.
Step 82: Capture at least one environmental image signal related to the electric vehicle.
Step 84: Apply an artificial intelligence technology to analyze the at least one environmental image signal, to generate an analysis result, and control the power module according to the analysis result.
Step 86: End.

The detailed operation and variations of the monitoring method 8 can be referred to in the previous descriptions and will not be repeated here.

In the prior art, the safety protection measures of charging piles are built upon the battery management system and the power detection system of the vehicle. However, these protection measures can only respond to abnormal power input and output, and cannot provide early warnings for environmental factors. Especially in public charging stations where there is usually no dedicated staff on duty for inspection, problems cannot be reported in time when they occur, potentially leading to larger accidents. In comparison, the monitoring system of the present invention utilizes various monitoring technologies, particularly artificial intelligence technology, to detect environmental information during the charging process, make judgments and take actions at the initial stage of abnormal situations, preventing greater harm. Therefore, the present invention can enhance the charging safety protection of electric vehicles.

## Claims

1. A monitoring system (1), for a charging pile (2), wherein the charging pile (2) charges an electric vehicle (3) through a power module (20), the monitoring system (1) **characterized by** comprising:
an image capture module (10), configured to capture at least one environmental image signal (IMG) related to the electric vehicle (3); and
a control module (16), coupled to the image capture module (10), configured to apple an artificial intelligence technology to analyze the at least one environmental image signal (IMG), to generate an analysis result, and control the power module (20) according to the analysis result.

2. The monitoring system (1) of claim 1, **characterized in that** when the analysis result indicates that a probability of a dangerous condition occurring is greater than a threshold value, the control module (16) controls the power module (20) to stop charging the electric vehicle (3).

3. The monitoring system (1) of claim 2, **characterized in that** the at least one environmental image signal (IMG) indicates a smoke situation or a fire source within a predetermined range of the electric vehicle (3), and the dangerous condition is a fire, wherein the artificial intelligence technology uses machine learning to recognize the smoke situation or fire source, and determines the probability of the dangerous condition occurring based on characteristics of the smoke or fire source.

4. The monitoring system (1) of claim 2, **characterized in that** the at least one environmental image signal (IMG) indicates a flooding situation within a predetermined range of the electric vehicle (3), and the dangerous condition is a flood, wherein the artificial intelligence technology uses machine learning to recognize the flooding situation, and determines the probability of the dangerous condition occurring based on characteristics of the flooding situation.

5. The monitoring system (1) of claim 2, **characterized in that** the at least one environmental image signal (IMG) indicates that the electric vehicle (3) encounters a vibration situation, and the dangerous condition is a strong earthquake, wherein the artificial intelligence technology uses machine learning to recognize the vibration situation, and determines the probability of the dangerous condition occurring based on characteristics of the vibration situation.

6. The monitoring system (1) of claim 2, **characterized in that** the control module (16) is further configured to set the threshold value.

7. The monitoring system (1) of claim 1, **characterized in that** when the analysis result indicates that the electric vehicle (3) has been collided with, the control module (16) controls the power module (20) to stop charging the electric vehicle (3).

8. The monitoring system (1) of claim 1, **characterized by** further comprising:
a temperature sensing module (12), coupled to the control module (16), configured to sense a temperature signal (TMP) of an environment near the electric vehicle (3), wherein the control module (16) is further configured to control the power module (20) to stop charging the electric vehicle (3) or reduce a charging current when the temperature signal (TMP) exceeds a temperature threshold, wherein the control module (16) is further configured to set the temperature threshold; or
a communication module (14), coupled to the control module (16), wherein the control module (16) uses the communication module (14) to exchange messages with a host, wherein the host is a strong earthquake notification service host, used to issue a strong earthquake notification, and the control module (16) is further configured to control the power module (20) to stop charging the electric vehicle (3) when the communication module (14) receives the strong earthquake notification and the strong earthquake notification indicates that a location of the electric vehicle (3) is affected by a strong earthquake, wherein the host is a fire alarm control panel, used to issue a fire alarm, and the control module (16) is further configured to control the power module (20) to stop charging the electric vehicle (3) when the communication module (14) receives the fire alarm and the fire alarm indicates that a location of the electric vehicle (3) is affected by a fire, wherein the host is a communication software service host, which is used to connect to at least one communication software of at least one management personnel, and the control module (16) is further configured to transmit the analysis result to the at least one communication software of the at least one management personnel through the communication module (14) and the communication software service host; or
a warning device, coupled to the control module (16), configured to issue a warning signal, wherein the control module (16) is further configured to control the warning device to issue the warning signal based on a charging condition of the power module.

9. A monitoring method (8), for a charging pile, wherein the charging pile charges an electric vehicle through a power module, the monitoring method (8) **characterized by** comprising:
capturing at least one environmental image signal related to the electric vehicle (82); and
applying an artificial intelligence technology to analyze the at least one environmental image signal, to generate an analysis result, and control the power module according to the analysis result (80).

10. The monitoring method (8) of claim 9, **characterized by** further comprising controlling the power module to stop charging the electric vehicle when the analysis result indicates that a probability of a dangerous condition occurring is greater than a threshold value.

11. The monitoring method (8) of claim 10, **characterized in that** the at least one environmental image signal indicates a smoke situation or a fire source within a predetermined range of the electric vehicle, and the dangerous condition is a fire, wherein the artificial intelligence technology uses machine learning to recognize the smoke situation or fire source, and determines the probability of the dangerous condition occurring based on characteristics of the smoke or fire source.

12. The monitoring method (8) of claim 10, **characterized in that** the at least one environmental image signal indicates a flooding situation within a predetermined range of the electric vehicle, and the dangerous condition is a flood, wherein the artificial intelligence technology uses machine learning to recognize the flooding situation, and determines the probability of the dangerous condition occurring based on characteristics of the flooding situation.

13. The monitoring method (8) of claim 10, **characterized in that** the at least one environmental image signal indicates that the electric vehicle encounters a vibration situation, and the dangerous condition is a strong earthquake, wherein the artificial intelligence technology uses machine learning to recognize the vibration situation, and determines the probability of the dangerous condition occurring based on characteristics of the vibration situation.

14. The monitoring method (8) of claim 10, **characterized by** further comprising setting the threshold value.

15. The monitoring method (8) of claim 9, **characterized by** further comprising:
controlling the power module to stop charging the electric vehicle when the analysis result indicates that the electric vehicle has been collided with; or
sensing a temperature signal of an environment near the electric vehicle, and controlling the power module to stop charging the electric vehicle or reduce a charging current when the temperature signal exceeds a temperature threshold; and setting the temperature threshold; or
exchanging messages with a host, wherein the host is a strong earthquake notification service host, used to issue a strong earthquake notification, and the monitoring method further comprises controlling the power module to stop charging the electric vehicle when the strong earthquake notification is received and indicates that a location of the electric vehicle is affected by a strong earthquake, wherein the host is a fire alarm control panel, used to issue a fire alarm, and the monitoring method further comprises controlling the power module to stop charging the electric vehicle when the fire alarm is received and indicates that a location of the electric vehicle is affected by a fire; wherein the host is a communication software service host, which is used to connect to at least one communication software of at least one management personnel, and the monitoring method further comprises transmitting the analysis result to the at least one communication software of the at least one management personnel through the communication software service host; or
controlling a warning device to issue a warning signal based on a charging condition of the power module.
